# EUROPEAN PATENT APPLICATION

(11) **EP 4 708 984 A1**
(43) Date of publication of application: **11.03.2026**
(21) Application number: 24830977.5
(22) Date of filing: 28.06.2024
(51) Int. Cl.: H04W 56/00

(54) **COMMUNICATION METHOD AND APPARATUS**

(30) Priority: 30.06.2023 CN 202310799523; 12.07.2023 CN 202310858001
(71) Applicant: Huawei Technologies Co., Ltd., Shenzhen, Guangdong 518129 (CN)
(72) Inventor: FAN, Liangliang, Shenzhen, Guangdong 518129 (CN); XU, Haibo, Shenzhen, Guangdong 518129 (CN); XUE, Lixia, Shenzhen, Guangdong 518129 (CN)
(74) Representative: Grünecker Patent- und Rechtsanwälte PartG mbB
(86) International application number: PCT/CN2024/102368
(87) International publication number: WO 2025/002348

(57) **Abstract**

This application relates to a communication method and apparatus. A terminal device may receive first information from a first cell, to obtain NTN assistance information of a first satellite and NTN assistance information of a second satellite. When the first information is received, the first satellite corresponds to the first cell, and a cell identity corresponding to the second satellite is the same as a cell identity of the first cell. This means that after the first satellite stops serving the first cell, the second satellite is to take over from the first satellite. Further, when the terminal device re-synchronizes with the first cell or before the terminal device re-synchronizes with the first cell, the terminal device restarts a timer. Start time of the timer is start time of the NTN assistance information of the second satellite, and duration of the timer is validity duration of the NTN assistance information of the second satellite. This means that the timer maintains the NTN assistance information of the second satellite. In this way, the terminal device can successfully re-synchronize with the first cell.

## Description

This application claims priorities to Chinese Patent Application No. 202310799523.6, filed with the China National Intellectual Property Administration on June 30, 2023 and entitled "COMMUNICATION METHOD AND APPARATUS", and to Chinese Patent Application No. 202310858001.9, filed with the China National Intellectual Property Administration on July 12, 2023 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

In the communication technologies, upon reception of a system information block 19 (system information block 19, SIB19), or upon reception of a radio resource control reconfiguration (radio resource control reconfiguration) message that is of a target cell and that includes reconfiguration with sync, or upon conditional reconfiguration execution, a terminal device may start or restart timer T430 to maintain corresponding ephemeris information. However, if timer T430 is still started or restarted in this manner in a scenario in which a satellite is switched and a cell is not switched, the ephemeris information maintained by timer T430 may be ephemeris information of a source satellite. In addition, the terminal device synchronizes with a cell (a target satellite provides a service for the cell) by using the ephemeris information maintained by timer T430. Because the ephemeris information maintained by timer T430 is the ephemeris information of the source satellite, the terminal device cannot synchronize with the cell.

### SUMMARY

This application provides a communication method and apparatus, so that a terminal device can successfully re-synchronize with a first cell.

According to a first aspect, a communication method is provided. The method may be performed by a terminal device, may be performed by a module (for example, a processor, a chip, or a chip system) used in the terminal device, or may be implemented by a logical node, a logical module, or software that can implement all or a part of functions of the terminal device. In the communication method, first information from a first cell may be received, where the first information includes non-terrestrial network NTN assistance information of a first satellite and NTN assistance information of a second satellite, the first satellite corresponds to the first cell, and a cell identity corresponding to the second satellite is the same as a cell identity of the first cell. Therefore, a timer may be restarted when the terminal device re-synchronizes with the first cell or before the terminal device re-synchronizes with the first cell. Start time of the timer is start time of the NTN assistance information of the second satellite, and duration of the timer is validity duration of the NTN assistance information of the second satellite.

It may be learned that in the foregoing embodiment, the terminal device may receive the first information from the first cell, to obtain the NTN assistance information of the first satellite and the NTN assistance information of the second satellite. When the first information is received, the first satellite corresponds to the first cell, and the cell identity corresponding to the second satellite is the same as the cell identity of the first cell. This means that after the first satellite stops serving the first cell, the second satellite is to take over from the first satellite. Further, when the terminal device re-synchronizes with the first cell or before the terminal device re-synchronizes with the first cell, the terminal device restarts the timer. This means that the terminal device may restart the timer in a scenario in which satellite switch without cell identity change occurs. In addition, the start time of the timer is the start time of the NTN assistance information of the second satellite, and the duration of the timer is the validity duration of the NTN assistance information of the second satellite. This means that it is the NTN assistance information of the second satellite that the timer maintains, so that the terminal device can successfully re-synchronize with the first cell.

In a possible implementation, time at which the terminal device re-synchronizes with the first cell is any one of the following: time at which the first satellite stops serving the first cell; time after time at which the first satellite stops serving the first cell, at an interval of preset time; or time at which the second satellite starts to serve the first cell. The terminal device is located in the first cell.

In a possible implementation, the method further includes: receiving second information from the first cell, where the second information indicates the time at which the terminal device re-synchronizes with the first cell.

In a possible implementation, time of restarting the timer is any one of the following: the time at which the first satellite stops serving the first cell; the time after the time at which the first satellite stops serving the first cell, at the interval of the preset time; or the time at which the second satellite starts to serve the first cell. The terminal device is located in the first cell.

In a possible implementation, the method further includes: receiving third information from the first cell, where the third information indicates the time at which a terminal device restarts the timer.

In a possible implementation, the second information or the third information further indicates that the first cell supports satellite switch without cell identity change.

In a possible implementation, after the first information is received, and before the terminal device re-synchronizes with the first cell and restarts the timer, the method further includes: starting the timer, where start time of the timer is start time of the NTN assistance information of the first satellite, and duration of the timer is validity duration of the NTN assistance information of the first satellite.

In a possible implementation, the NTN assistance information of the first satellite includes ephemeris information of the first satellite, the start time of the NTN assistance information of the first satellite, and the validity duration of the NTN assistance information of the first satellite; and the NTN assistance information of the second satellite includes ephemeris information of the second satellite, the start time of the NTN assistance information of the second satellite, and the validity duration of the NTN assistance information of the second satellite.

In a possible implementation, the first satellite serves the first cell when the first information is received; and the second satellite serves the first cell when the terminal device re-synchronizes with the first cell or after the terminal device re-synchronizes with the first cell.

According to a second aspect, a communication apparatus is provided, and includes a unit or a module configured to implement the method according to any one of the first aspect.

According to a third aspect, a communication apparatus is provided. The communication apparatus includes at least one processor and a memory. The memory is configured to store a computer program or instructions. The at least one processor is configured to execute the computer program or the instructions in the memory, so that the method according to any one of the first aspect is performed.

According to a fourth aspect, a communication system is provided. The communication system includes a terminal device, and the terminal device is configured to perform the method according to any one of the first aspect.

According to a fifth aspect, a computer-readable storage medium is provided. The computer-readable storage medium stores computer instructions. When the computer instructions are executed, a computer is enabled to perform the method according to any one of the first aspect.

According to a sixth aspect, a computer program product is provided. The computer program product includes computer program code. When the computer program code is run on a computer, the computer is enabled to perform the method according to any one of the first aspect.

According to a seventh aspect, a chip is provided. The chip includes at least one processor and an interface, and the processor is configured to read and execute instructions stored in a memory. When the instructions are run, the chip is enabled to perform the method according to any one of the first aspect.

### BRIEF DESCRIPTION OF DRAWINGS

The following briefly describes accompanying drawings used in describing embodiments.
FIG. 1 shows a basic architecture of a communication system according to an embodiment of this application;
FIG. 2 is a diagram of NTN-device-based RAN architectures to which an embodiment of this application is applicable;
FIG. 3 is a schematic flowchart of a communication method according to an embodiment of this application;
FIG. 4 is a diagram of a structure of a communication apparatus according to an embodiment of this application; and
FIG. 5 is a diagram of a structure of another communication apparatus according to an embodiment of this application.

### DESCRIPTION OF EMBODIMENTS

The following describes technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements or functions. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that the technical solution of this application may be applied to a non-terrestrial network (non-terrestrial network, NTN) or a scenario in which the NTN and a terrestrial network (terrestrial network, TN) are integrated. The technical solution of this application may use a long term evolution (long term evolution, LTE) access technology, a 5th generation mobile communication (5th generation mobile communication, 5G) access technology, or access technologies evolved after 5G, such as a 6th generation mobile communication (6th generation mobile communication, 6G) access technology.

The following describes a basic architecture of a communication system according to an embodiment of this application. The communication system provided in this application may include one or more satellites and one or more terminal devices.

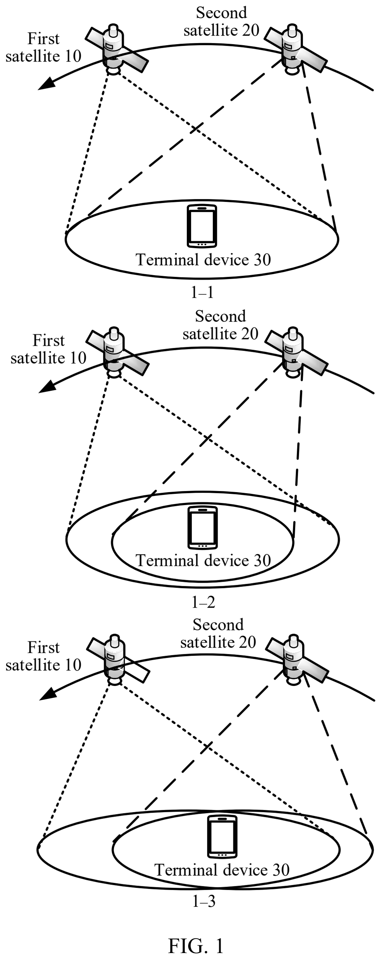

The following uses a system architecture shown in FIG. 1 as an example for description. As shown in FIG. 1, the communication system includes a first satellite 10, a second satellite 20, and a terminal device 30. Because a satellite is in a high-speed moving state, the satellite may provide a service for a cell in limited time. The cell herein may be referred to as a first cell. The terminal device 30 is located in the first cell. It may be understood that the first satellite 10 may serve the first cell. When the first satellite 10 cannot continue to provide a service for the first cell due to movement of the first satellite 10, the second satellite 20 arrives at the first cell, so that the second satellite 20 can continue to provide a service for the first cell. This process may be referred to as satellite switch without cell identity change. In other words, both a cell identity corresponding to the first satellite 10 and a cell identity corresponding to the second satellite 20 are a cell identity of the first cell. The cell (for example, the first cell) mentioned in this application is an NTN cell. The cell identity mentioned in this application may be a physical cell identifier (physical cell identifier, PCI), an identifier of a tracking area (tracking area, TA), or the like. The identifier of the tracking area may be a tracking area identity (tracking area identity, TAI) or a tracking area code (tracking area code, TAC). The tracking area may include a plurality of cells, and one cell belongs to one tracking area.

It should be noted that time at which the first satellite 10 stops serving the first cell is earlier than or equal to time at which the second satellite 20 starts to serve the first cell. The first satellite 10 may be referred to as a source satellite, and the second satellite 20 may be referred to as a target satellite. The source satellite is a satellite that provides a service for the first cell before satellite switch, and the target satellite is a satellite that provides a service for the first cell after satellite switch.

An area covered by the first satellite 10 may be referred to as a first area, and an area covered by the second satellite 20 may be referred to as a second area. In a possible implementation, as shown in 1-1 in FIG. 1, the first area and the second area may completely overlap. In this case, the first area and the second area may be a physical area (also referred to as a geographical area) corresponding to the first cell, or the first area and the second area may include a physical area corresponding to the first cell. In another possible implementation, as shown in 1-2 in FIG. 1, the first area may include the second area. In this case, the first area or the second area may be a physical area corresponding to the first cell, or the first area may include a physical area corresponding to the first cell, and the physical area corresponding to the first cell includes the second area. In still another possible implementation, as shown in 1-3 in FIG. 1, the first area and the second area may partially overlap. In this case, an overlapping area between the first area and the second area may be a physical area corresponding to the first cell.

Optionally, the first satellite and the second satellite may be a same satellite or different satellites.

It should be noted that quantities of satellites and terminal devices in FIG. 1 are merely examples, and should not be considered as a specific limitation on this application. The following describes in detail a terminal device and a satellite that are related to the system architecture.

### 1. Terminal device

The terminal device is an entity that is on a user side and that is configured to receive a signal, send a signal, or receive a signal and send a signal. The terminal device is configured to provide one or more of a voice service and a data connectivity service for a user. The terminal device may be a device that has wireless sending and receiving functions and that can cooperate with a network device to provide a communication service for the user. Specifically, the terminal device may refer to user equipment (user equipment, UE), an access terminal, a subscriber unit, a subscriber station, a mobile station, a remote station, a remote terminal, a mobile device, a terminal, a wireless communication device, a user agent, a user apparatus, or a roadside unit (roadside unit, RSU). The terminal device may alternatively be an unmanned aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable smart device), a virtual reality (virtual reality, VR) terminal, an augmented reality (augmented reality, AR) terminal, a wireless terminal in remote medical (remote medical), a wireless terminal in industrial control (industrial control), a wireless terminal in self-driving (self-driving), a wireless terminal in a smart grid (smart grid), a wireless terminal in transportation safety (transportation safety), a wireless terminal in a smart city (smart city), wireless terminals in smart home (smart home), or the like. Alternatively, the terminal device may be a terminal in a 5G system, or a terminal in a next-generation communication system. This is not limited in embodiments of this application. Optionally, the terminal device may be referred to as an anchor device.

A device form of the terminal device is not limited in embodiments of this application. An apparatus configured to implement a function of the terminal device may be the terminal device, or may be an apparatus that can support the terminal device in implementing the function, for example, a chip system. The apparatus may be mounted in the terminal device or used in a manner of matching the terminal device. In embodiments of this application, the chip system may include a chip, or may include a chip and another discrete component.

### 2. Satellite

The satellite may provide a radio access service for a terminal device, schedule radio resources to an accessed terminal device, and provide a reliable radio transmission protocol, a data encryption protocol, and the like.

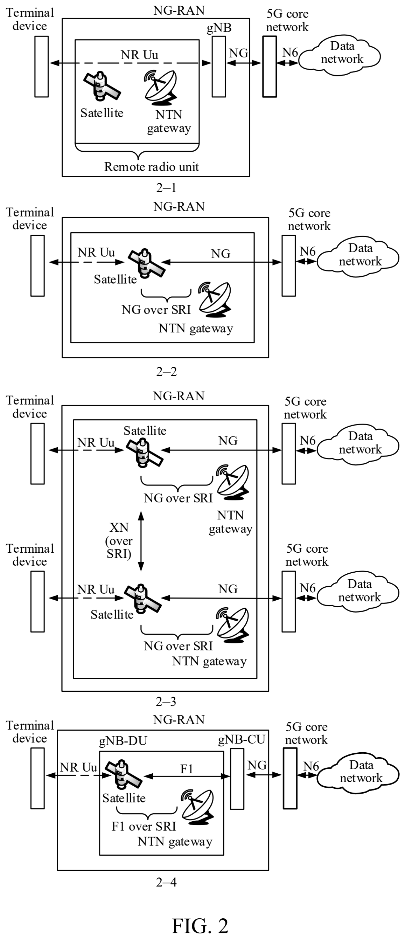

For example, in a transparent satellite (transparent satellite) architecture shown in 2-1 in FIG. 2, a radio access network (radio access network, RAN) may include a remote radio unit (remote radio unit, RRU) and a base station (for example, a gNB in FIG. 2). The RRU may include a satellite and an NTN gateway (gateway). The satellite is for radio frequency filtering (radio frequency filtering) and frequency conversion and amplification (frequency conversion and amplification), to ensure that a waveform signal repeated by a payload is un-changed (the waveform signal repeated by the payload is un-changed). In other words, the satellite is mainly used as a layer 1 (L1 for short) relay device, and is for regeneration of a physical layer signal (to be specific, processing of radio frequency filtering and frequency conversion and amplification), and does not have another higher protocol layer. The NTN gateway supports all functions of forwarding a signal over an NR-Uu interface. The NR-Uu interface is an interface between a terminal device and a base station in the protocol.

For another example, in an architecture of a regenerative satellite without an inter-satellite link (regenerative satellite without inter-satellite link) shown in 2-2 in FIG. 2, a RAN includes a satellite and an NTN gateway. As a base station, the satellite has a processing function of the base station. The NTN gateway is a transport network layer node and supports a corresponding transport protocol. The satellite is connected to the NTN gateway through a satellite radio interface (satellite radio interface, SRI). An NG interface is over the SRI (NG over SRI) and is responsible for higher-layer information transmission.

For another example, an architecture of a regenerative satellite with an inter-satellite link (regenerative satellite with inter-satellite link) shown in 2-3 in FIG. 2 is similar to that shown in 2-2 in FIG. 2, and a difference lies in that there is an SRI, and a plurality of satellites may be connected through an Xn interface. The Xn interface is over an SRI (Xn over SRI).

For another example, in an architecture of a regenerative satellite with a distributed unit (distributed unit, DU) processing function of a base station shown in 2-4 in FIG. 2, a satellite serves as a DU in the base station, and performs a base station function together with a central unit (central unit, CU). There is an NTN gateway between the DU on the satellite and the CU on the ground. The NTN gateway is a transport network layer node and supports a corresponding transport protocol. The satellite is connected to the NTN gateway through an F1 interface. The F1 interface is over an SRI (F1 over SRI).

For another example, in an architecture of a satellite with an integrated access and backhaul (integrated access and backhaul, IAB) function, a satellite is used as a base station with the IAB function.

When the satellite is used as a layer 1 relay device (that is, in the transparent satellite architecture shown in 2-1 in FIG. 2), such a communication system may further include a base station. The base station may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP); may be a Wi-Fi system; or may be an enhanced mobile broadband (enhanced mobile broadband, eMBB) system, an ultra-reliable low-latency communication (ultra-reliable low-latency communication, URLLC) system, a massive machine-type communication (massive machine-type communication, mMTC) system, a long range (long range, LoRa) system, or an internet of vehicles system. The base station may further include the foregoing two or more different radio access systems. The base station may alternatively be an open radio access network (radio access network, RAN) (open RAN, O-RAN).

In this application, the satellite may be, for example, a medium earth orbit (medium earth orbit, MEO) satellite or a low earth orbit (low earth orbit, LEO) satellite of a non-geostationary earth orbit (non-geostationary earth orbit, NGEO), a high-altitude communication platform (high altitude platform station, HAPS), an evolved NodeB (evolved NodeB, eNB), or a 5G NodeB (gNB).

In embodiments of this application, a form of the satellite is not limited. An apparatus configured to implement a function of the satellite may be the satellite, or may be an apparatus that can support the satellite in implementing the function, for example, a chip system. The apparatus may be installed in a satellite or used in a manner of matching the satellite.

To facilitate understanding of content of this solution, the following further explains and describes some terms in embodiments of this application, so as to facilitate understanding by a person skilled in the art. This part is merely for ease of understanding, and cannot be considered as a specific limitation on this application.

### 1. NTN assistance information

The NTN assistance information of a satellite may include ephemeris information of the satellite. The satellite herein may include a first satellite or a second satellite. The ephemeris information of the satellite indicates a location of the satellite. Optionally, the ephemeris information of the satellite may include at least one of the following: an angle of inclination of an orbital plane of the satellite, a right ascension of an ascending node, a semi-major axis of an orbital ellipse, an eccentricity of the orbital ellipse, an angular distance of a perigee, time at which the satellite passes the perigee, and the like.

In a possible implementation, the NTN assistance information of the satellite may further include start time of the NTN assistance information of the satellite. The start time of the NTN assistance information of the satellite may be indicated, for example, by an epoch time (epoch time) field. For example, the epoch time field may be represented by using a frame number and a subframe (subframe) number of a system frame. The frame number of the system frame may be referred to as a system frame number (system frame number, SFN) for short. A number range of the SFN is 0 to 1023, one system frame may include 10 subframes, and a length of one subframe is 1 millisecond (ms). The start time of the NTN assistance information of the satellite may be the subframe number. In another possible implementation, the start time of the NTN assistance information of the satellite may be end time of a system window (SI window) of SIB19, SIB19 may include the NTN assistance information of the satellite, and the end time of the SI window of SIB 19 may be received from a first cell.

Optionally, the NTN assistance information of the satellite may further include validity duration of the NTN assistance information of the satellite. The validity duration of the NTN assistance information of the satellite may be indicated, for example, by using a non-terrestrial network synchronization validity time field (ntn-UlSyncValidityDuration) field. The validity duration indicated by ntn-UlSyncValidityDuration is not limited in this application. For example, for a non-geosynchronous orbit (non-geosynchronous orbit, NGSO), a maximum value of ntn-UlSyncValidityDuration is 240 seconds. For another example, for a geosynchronous satellite orbit (geostationary satellite orbit, GSO) scenario, a maximum value of ntn-UlSyncValidityDuration may be 900 seconds.

### 2. Timer

The timer mentioned in this application may be timer T430.

Generally, upon reception of SIB 19, or upon reception of a radio resource control reconfiguration message that is of a target cell and that includes reconfiguration with sync, or upon conditional reconfiguration execution, a terminal device may start or restart timer T430 to maintain corresponding ephemeris information. However, if timer T430 is still started or restarted in this manner in a scenario in which a satellite is switched and a cell is not switched, the ephemeris information maintained by timer T430 may be ephemeris information of a source satellite. In addition, the terminal device synchronizes with a cell (a target satellite provides a service for the cell) by using the ephemeris information maintained by timer T430. Because the ephemeris information maintained by timer T430 is the ephemeris information of the source satellite, the terminal device cannot synchronize with the cell. Based on this, this application provides a communication method, to resolve this problem.

The following describes embodiments of this application in detail. Specifically, the following terminal device may be the terminal device in FIG. 1, and the following first satellite and second satellite may be the satellites in FIG. 1. It should be noted that names of messages between network elements, names of parameters in the messages, or the like in the following embodiments are merely examples, and there may be other names in a specific implementation. This is not specifically limited in embodiments of this application.

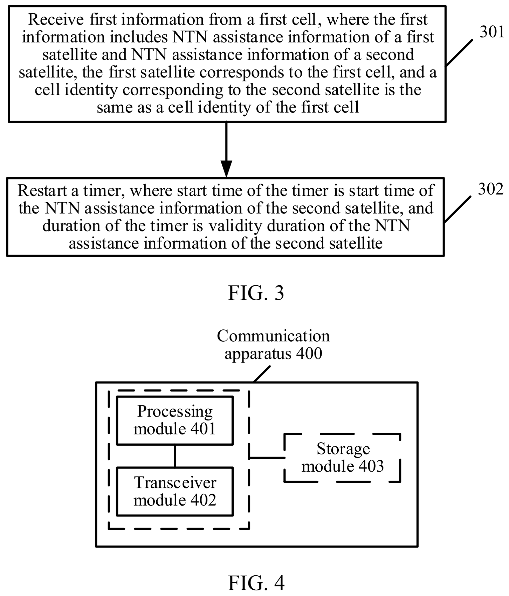

FIG. 3 shows a communication method according to an embodiment of this application. The communication method includes but is not limited to the following steps.

301: A terminal device receives first information from a first cell, where the first information includes NTN assistance information of a first satellite and NTN assistance information of a second satellite, the first satellite corresponds to the first cell, and a cell identity corresponding to the second satellite is the same as a cell identity of the first cell.

The terminal device may be located in the first cell.

Optionally, the first information may be carried in SIB19. For example, the NTN assistance information of the first satellite and the NTN assistance information of the second satellite that are included in the first information may be carried in a same information element or different information elements of SIB19. This is not limited herein.

After the first satellite stops serving the first cell, the second satellite may take over from the first satellite to continue to serve the first cell. For example, when the first information is received, the first satellite serves the first cell. In other words, the first satellite corresponds to the first cell. Certainly, before the first information is received, the first satellite may also serve the first cell. In other words, before the terminal device re-synchronizes with the first cell (time at which the terminal device re-synchronizes with the first cell is later than time at which the terminal device receives the first information), the first satellite serves the first cell. By contrast, when the terminal device re-synchronizes with the first cell or after the terminal device re-synchronizes with the first cell, the second satellite serves the first cell.

Optionally, the terminal device may determine, in any one of the following manners, that the satellite that takes over from the first satellite to continue to serve the first cell is the second satellite. Details are as follows:
1. The first information further includes the cell identity corresponding to the second satellite. When the cell identity corresponding to the second satellite is the same as the cell identity of the first cell, the terminal device may determine that the satellite that takes over fromthe first satellite to continue to serve the first cell is the second satellite. Optionally, the NTN assistance information of the second satellite and the cell identity corresponding to the second satellite may be included in a first neighboring cell list. The first neighboring cell list may further include a frequency of the second satellite, and the frequency may refer to a number of a fixed frequency. This is not limited herein. Optionally, the first neighboring cell list may further include NTN assistance information of another satellite, a cell identity corresponding to the another satellite, and a frequency of the another satellite.
2. The first information further includes first indication information corresponding to the second satellite, and the first indication information indicates that the cell identity corresponding to the second satellite is the same as the cell identity of the first cell. Optionally, the NTN assistance information of the second satellite and the first indication information may be included in a second neighboring cell list. Optionally, the second neighboring cell list may further include NTN assistance information of another satellite, or the second neighboring cell list may further include NTN assistance information of another satellite and first indication information corresponding to the another satellite. The first indication information corresponding to the another satellite indicates that a cell identity corresponding to the another satellite is different from the cell identity of the first cell. It may be learned that because the second neighboring cell list does not include a frequency, signaling overheads can be reduced.

It should be noted that a neighboring cell list (for example, the first neighboring cell list or the second neighboring cell list) mentioned in this application may also be referred to as ephemeris configuration of a neighboring cell. This is not limited herein.

Optionally, that the terminal device re-synchronizes with the first cell may also be understood as that the terminal device resumes synchronization with the first cell. It should be noted that synchronization mentioned in this application may be uplink synchronization and/or downlink synchronization. For a meaning of the synchronization, for example, refer to a specification of a protocol or a standard of a communication technology. This is not limited herein. The time at which the terminal device re-synchronizes with the first cell may be any one of the following:
1. Time at which the first satellite stops serving the first cell. This may also be understood as time at which the first satellite stops covering the first cell or time at which the first satellite stops covering a first area. For the first area herein, refer to related descriptions in FIG. 1. Details are not described herein again. Optionally, the time at which the first satellite stops serving the first cell may be indicated by using a first field. Optionally, the first field may be a t-service field or another field. This is not limited herein.
2. Time after the time at which the first satellite stops serving the first cell, at an interval of preset time. The preset time may be, for example, a value greater than 0 ms. A value of the preset time is not limited in this application. Optionally, the time after the time at which the first satellite stops serving the first cell, at the interval of the preset time may be indicated by using a second field. Optionally, the second field may be a t-gap field or another field. This is not limited herein.
3. Time at which the second satellite starts to serve the first cell. This may also be understood as time at which the second satellite starts to cover the first cell or time at which the second satellite stops covering a second area. For the second area herein, refer to related descriptions in FIG. 1. Details are not described herein again. Optionally, the time at which the second satellite starts to serve the first cell may be indicated by using a third field. Optionally, the third field may be a t-start field or a new field. This is not limited herein.

Optionally, the method may further include: The terminal device receives second information from the first cell, where the second information indicates the time at which the terminal device re-synchronizes with the first cell. For example, a first field, a second field, or a third field in the second information indicates the time at which the terminal device re-synchronizes with the first cell.

In a possible implementation, the second information may further indicate that the first cell supports satellite switch without cell identity change. Details are as follows:
1. In a scenario in which the time at which the terminal device re-synchronizes with the first cell is time indicated by the first field in the second information (to be specific, the time indicated by the first field is the time at which the first satellite stops serving the first cell), the second information may further include second indication information, and the second indication information may further indicate that the first cell supports satellite switch without cell identity change.
2. In a scenario in which the time at which the terminal device re-synchronizes with the first cell is time indicated by the second field in the second information (to be specific, the time indicated by the second field is the time after the time at which the first satellite stops serving the first cell, at the interval of the preset time), the second field may further indicate that the first cell supports satellite switch without cell identity change.
3. In a scenario in which the time at which the terminal device re-synchronizes with the first cell is time indicated by the third field in the second information (to be specific, the time indicated by the third field is the time at which the second satellite starts to serve the first cell), the third field may further indicate that the first cell supports satellite switch without cell identity change.

Optionally, the second information may be carried in SIB19.

302: The terminal device restarts a timer, where start time of the timer is start time of the NTN assistance information of the second satellite, and duration of the timer is validity duration of the NTN assistance information of the second satellite.

For example, when the terminal device re-synchronizes with the first cell, before the terminal device re-synchronizes with the first cell, or after the terminal device re-synchronizes with the first cell, the terminal device restarts the timer. In other words, there is no necessary sequence between the terminal device re-synchronizing with the first cell and the terminal device restarting the timer. To be specific, the terminal device may re-synchronize with the first cell before or after the terminal device restarts the timer, or the terminal device may re-synchronize with the first cell at the same time when the terminal device restarts the timer.

For the time at which the terminal device re-synchronizes with the first cell, refer to related descriptions of step 301. This may also be understood as that the time of restarting the timer is any one of the following: the time at which the first satellite stops serving the first cell; the time after the time at which the first satellite stops serving the first cell, at the interval of the preset time; or the time at which the second satellite starts to serve the first cell. In this case, the method may further include: The terminal device receives third information from the first cell, where the third information indicates the time at which the terminal device restarts the timer. For example, a first field, a second field, or a third field in the third information indicates the time at which the terminal device restarts the timer.

In a possible implementation, the third information may further indicate that the first cell supports satellite switch without cell identity change. Details are as follows:
1. In a scenario in which the time of restarting the timer is time indicated by the first field in the third information (to be specific, the time indicated by the first field is the time at which the first satellite stops serving the first cell), the third information may further include third indication information, and the third indication information may further indicate that the first cell supports satellite switch without cell identity change.
2. In a scenario in which the time of restarting the timer is time indicated by the second field in the third information (to be specific, the time indicated by the second field is the time after the time at which the first satellite stops serving the first cell, at the interval of the preset time), the second field may further indicate that the first cell supports satellite switch without cell identity change.
3. In a scenario in which the time of restarting the timer is time indicated by the third field in the third information (to be specific, the time indicated by the third field is the time at which the second satellite starts to serve the first cell), the third field may further indicate that the first cell supports satellite switch without cell identity change.

Optionally, after the first information is received, and before the terminal device re-synchronizes with the first cell and restarts the timer, the method further includes: The terminal device starts the timer, where start time of the timer is start time of the NTN assistance information of the first satellite, and duration of the timer is validity duration of the NTN assistance information of the first satellite.

It should be noted that, that the start time of the timer is start time of NTN assistance information of a specific satellite (for example, the first satellite or the second satellite) mentioned in this application may be understood as: The timer starts timing from the start time of the NTN assistance information of the satellite. That the duration of the timer is validity duration of the NTN assistance information of the satellite may be alternatively described as: A value of the timer is set to the validity duration of the NTN assistance information of the satellite. In other words, timing is stopped when the validity duration of the NTN assistance information of the satellite is reached. In addition, the starting the timer mentioned in this application may mean starting timing, and the restarting the timer may mean restarting timing. For example, after the value of the timer is reset to the validity duration of the NTN assistance information of the satellite, timing starts.

It may be learned that in the foregoing embodiment, the terminal device may receive the first information from the first cell, to obtain the NTN assistance information of the first satellite and the NTN assistance information of the second satellite. When the first information is received, the first satellite corresponds to the first cell, and the cell identity corresponding to the second satellite is the same as the cell identity of the first cell. This means that after the first satellite stops serving the first cell, the second satellite is to take over from the first satellite. Further, when the terminal device re-synchronizes with the first cell or before the terminal device re-synchronizes with the first cell, the terminal device restarts the timer. This means that the terminal device may restart the timer in a scenario in which satellite switch without cell identity change occurs. In addition, the start time of the timer is the start time of the NTN assistance information of the second satellite, and the duration of the timer is the validity duration of the NTN assistance information of the second satellite. This means that the timer maintains the NTN assistance information of the second satellite, so that the terminal device can successfully re-synchronize with the first cell.

The foregoing mainly describes, from a perspective of interaction between devices, the solution provided in this application. It may be understood that, to implement the foregoing functions, the foregoing devices include corresponding hardware structures and/or software modules for performing each function. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solution. The person skilled in the art may use different methods to implement the described functions for each particular application, but it should not be considered that the implementation goes beyond the scope of this application.

In embodiments of this application, the terminal device or the satellite (for example, the first satellite or the second satellite) may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

FIG. 4 is a diagram of a structure of a communication apparatus according to an embodiment of this application. The communication apparatus 400 may be used in the method shown in the embodiment of FIG. 3. As shown in FIG. 4, the communication apparatus 400 includes a processing module 401 and a transceiver module 402. The processing module 401 may be one or more processors, and the transceiver module 402 may be a transceiver or a communication interface. The communication apparatus may be configured to implement functions of the terminal device or the satellite (for example, the first satellite or the second satellite) in any one of the foregoing method embodiments, or configured to implement functions of a network element in any one of the foregoing method embodiments. The network element or network function may be an element for a network in a hardware device, may be a software function running on dedicated hardware, or may be a virtualization function instantiated on a platform (for example, a cloud platform). Optionally, the communication apparatus 400 may further include a storage module 403, configured to store program code and data of the communication apparatus 400.

In an instance, when the communication apparatus is used as the terminal device or a chip used in the terminal device, the communication apparatus performs the steps performed by the terminal device in the foregoing method embodiments. The transceiver module 402 is configured to specifically perform a sending action and/or receiving action performed by the terminal device in the embodiment of FIG. 3, for example, support the terminal device in performing another process of the technology described in this specification. The processing module 401 may be configured to support the communication apparatus 400 in performing a processing action in the foregoing method embodiments, for example, support the terminal device in performing another process of the technology described in this specification.

For example, the transceiver module 402 is configured to receive first information from a first cell, where the first information includes non-terrestrial network NTN assistance information of a first satellite and NTN assistance information of a second satellite, the first satellite corresponds to the first cell, and a cell identity corresponding to the second satellite is the same as a cell identity of the first cell. The processing module 401 is configured to restart a timer when the terminal device re-synchronizes with the first cell or before the terminal device re-synchronizes with the first cell. Start time of the timer is start time of the NTN assistance information of the second satellite, and duration of the timer is validity duration of the NTN assistance information of the second satellite.

In a possible implementation, the transceiver module 402 is further configured to receive second information from the first cell, where the second information indicates time at which the terminal device re-synchronizes with the first cell.

In a possible implementation, the transceiver module 402 is further configured to receive third information from the first cell, where the third information indicates time at which the terminal device restarts the timer.

In a possible implementation, after the first information is received, and before the terminal device re-synchronizes with the first cell and restarts the timer, the transceiver module 402 is further configured to start the timer, where start time of the timer is start time of the NTN assistance information of the first satellite, and duration of the timer is validity duration of the NTN assistance information of the first satellite.

In a possible implementation, when the terminal device or the satellite (for example, the first satellite or the second satellite) is a chip, the transceiver module 402 may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 401 may be the processor. The processor may execute computer-executable instructions stored in the storage module, so that the chip performs the method in the embodiment shown in FIG. 4. Further, the processor may include a controller, an arithmetic logic unit, and a register. For example, the controller is mainly responsible for instruction decoding, and sending a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for saving register operands, intermediate operation results, and the like that are temporarily stored during instruction execution. During specific implementation, a hardware architecture of the processor may be an ASIC architecture, a microprocessor without interlocked piped stages (microprocessor without interlocked piped stages architecture, MIPS) architecture, an advanced reduced instruction set computing machines (advanced RISC machines, ARM) architecture, a second processor (network processor, NP) architecture, or the like. The processor may be a single-core or multi-core processor. The storage module may be a storage module inside the chip, for example, a register or a cache. Alternatively, the storage module may be a storage module, for example, a ROM or another type of static storage device that can store static information and instructions, or a RAM, located outside the chip.

It should be noted that a function corresponding to each of the processor and the interface may be implemented by using a hardware design, a software design, or a combination of software and hardware. This is not limited herein.

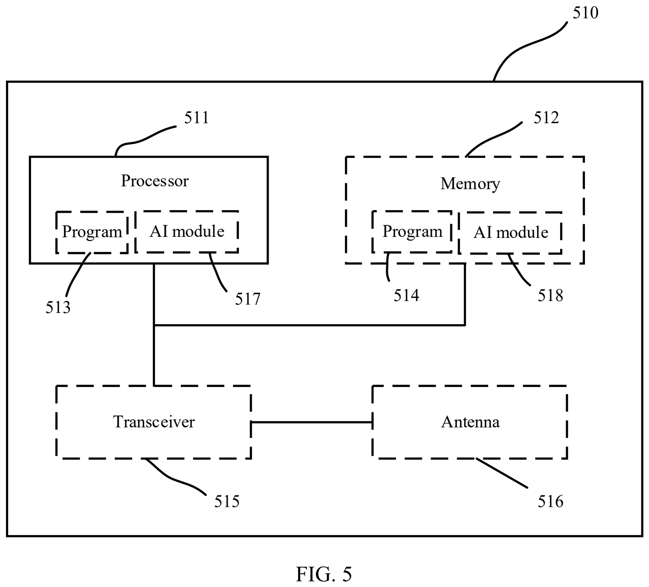

FIG. 5 is a diagram of a structure of another communication apparatus according to an embodiment of this application. It may be understood that the communication apparatus 510 includes means in necessary forms, such as a module, a unit, an element, a circuit, or an interface, which are appropriately configured together to implement the solution. The communication apparatus 510 may be the foregoing terminal device or satellite (for example, the first satellite or the second satellite), or may be a component (for example, a chip) in these devices, to implement the method described in the foregoing method embodiments. The communication apparatus 510 includes one or more processors 511. The processor 511 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the terminal device, the satellite (for example, the first satellite or the second satellite), or the chip), execute a software program, and process data of the software program.

Optionally, in a design, the processor 511 may include a program 513 (which may also be referred to as code or instructions sometimes). The program 513 may be run on the processor 511, so that the communication apparatus 510 performs the method described in the foregoing embodiment. In another possible design, the communication apparatus 510 includes a circuit (which is not shown in FIG. 5), and the circuit is configured to implement functions of the terminal device or the satellite (for example, the first satellite or the second satellite) in the foregoing embodiment. Optionally, the communication apparatus 510 may include one or more memories 512, and a program 514 (which may also be referred to as code or instructions sometimes) is stored in the memory 512. The program 514 may be run on the processor 511, so that the communication apparatus 510 performs the method described in the foregoing method embodiment.

Optionally, the processor 511 and/or the memory 512 may include an AI module 517 and an AI module 518. The AI module is configured to implement an AI-related function. The AI module may be implemented by software, hardware, or a combination of software and hardware. For example, the AI module may include a RIC module. For example, the AI module may be a near-real-time RIC or a non-real-time RIC. Optionally, the processor 511 and/or the memory 512 may further store data. The processor and the memory may be separately disposed, or may be integrated together.

Optionally, the communication apparatus 510 may further include a transceiver 515 and/or an antenna 516. The processor 511 may also be referred to as a processing unit sometimes, and controls the communication apparatus (for example, the terminal device or the satellite (for example, the first satellite or the second satellite)). The transceiver 515 may also be sometimes referred to as a transceiver unit, a transceiver machine, a transceiver circuit, a transceiver, or the like, and is configured to implement a transceiver function of the communication apparatus through the antenna 516.

An embodiment of this application further provides a communication apparatus. The communication apparatus includes at least one processor and a memory. The memory is configured to store a computer program or instructions. The at least one processor is configured to execute the computer program or the instructions in the memory, so that the method in any one of the implementations in the embodiment shown in FIG. 3 is performed.

An embodiment of this application further provides a computer-readable storage medium. The computer-readable storage medium stores computer instructions. When the computer instructions are executed, a computer is enabled to perform the method in any one of the implementations in the embodiment shown in FIG. 3.

An embodiment of this application further provides a computer program product. The computer program product includes computer program code. When the computer program code is run on a computer, the computer is enabled to perform the method in any one of the implementations in the embodiment shown in FIG. 3.

An embodiment of this application further provides a chip. The chip includes at least one processor and an interface. The processor is configured to read and execute instructions stored in a memory. When the instructions are run, the chip is enabled to perform the method in any one of the implementations in the embodiment shown in FIG. 3.

The foregoing units described as separate parts may or may not be physically separate, and parts displayed as units may or may not be physical units, that is, may be located in one position, or may be distributed on a plurality of network units. Some or all of the units may be selected based on an actual requirement to achieve the objective of the solution in embodiments of this application. In addition, the network element units in embodiments of this application may be integrated into one processing unit, each of the units may exist alone physically, or two or more units may be integrated into one unit. The integrated unit may be implemented in a form of hardware or a software network element unit.

When implemented in the form of the software network element unit and sold or used as an independent product, the integrated unit may be stored in a computer-readable storage medium. Based on such an understanding, an essentially contributing part in the technical solution of this application or all or a part of the technical solution may be embodied in a form of a software product. The computer software product is stored in a storage medium and includes a plurality of instructions for instructing a computer device (which may be a personal computer, a terminal device, a cloud server, a network device, or the like) to perform all or some steps of the foregoing method in embodiments of this application. The foregoing storage medium includes any medium that can store program code, for example, a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information from a first cell, wherein the first information comprises non-terrestrial network NTN assistance information of a first satellite and NTN assistance information of a second satellite, the first satellite corresponds to the first cell, and a cell identity corresponding to the second satellite is the same as a cell identity of the first cell;
re-synchronizing with the first cell; and
restarting a timer, wherein start time of the timer is start time of the NTN assistance information of the second satellite, and duration of the timer is validity duration of the NTN assistance information of the second satellite, wherein
time of restarting the timer is any one of the following:
time at which the first satellite stops serving the first cell;
time after time at which the first satellite stops serving the first cell, at an interval of preset time; or
time at which the second satellite starts to serve the first cell.

2. The method according to claim 1, wherein time of re-synchronizing with the first cell is any one of the following:
the time at which the first satellite stops serving the first cell;
the time after the time at which the first satellite stops serving the first cell, at the interval of the preset time; or
the time at which the second satellite starts to serve the first cell, wherein
the terminal device is located in the first cell.

3. The method according to claim 1 or 2, wherein the method further comprises:
receiving second information from the first cell, wherein the second information indicates the time at which the terminal device re-synchronizes with the first cell.

4. The method according to claim 1, wherein the method further comprises:
receiving third information from the first cell, wherein the third information indicates the time at which a terminal device restarts the timer.

5. The method according to claim 3 or 4, wherein the second information or the third information further indicates that the first cell supports satellite switch without cell identity change.

6. The method according to any one of claims 1 to 5, wherein after receiving the first information and before re-synchronizing with the first cell, the method further comprises:
starting the timer, wherein start time of the timer is start time of the NTN assistance information of the first satellite, and duration of the timer is validity duration of the NTN assistance information of the first satellite.

7. The method according to any one of claims 1 to 6, wherein
the NTN assistance information of the first satellite comprises ephemeris information of the first satellite, the start time of the NTN assistance information of the first satellite, and the validity duration of the NTN assistance information of the first satellite; and
the NTN assistance information of the second satellite comprises ephemeris information of the second satellite, the start time of the NTN assistance information of the second satellite, and the validity duration of the NTN assistance information of the second satellite.

8. The method according to any one of claims 1 to 7, wherein the first satellite serves the first cell when the first information is received; and the second satellite serves the first cell during resynchronization with the first cell or after resynchronization with the first cell.

9. A communication apparatus, comprising a unit or a module configured to implement the method according to any one of claims 1 to 8.

10. A communication apparatus, wherein the communication apparatus comprises at least one processor and a memory, wherein the memory is configured to store a computer program or instructions, and the at least one processor is configured to execute the computer program or the instructions in the memory, so that the method according to any one of claims 1 to 8 is performed.

11. A computer-readable storage medium, wherein the computer-readable storage medium stores computer instructions; and when the computer instructions are executed, the computer is enabled to perform the method according to any one of claims 1 to 8.

12. A computer program product, wherein the computer program product comprises computer program code; and when the computer program code is run on a computer, the computer is enabled to perform the method according to any one of claims 1 to 8.

13. A chip, wherein the chip comprises at least one processor and an interface, and the processor is configured to read and execute instructions stored in a memory; and when the instructions are run, the chip is enabled to perform the method according to any one of claims 1 to 8.
